# NEUE EUROPÄISCHE PATENTSCHRIFT

(11) **EP 3 221 117 B2**
(45) Veröffentlichungstag und Bekanntmachung des Hinweises auf die Entscheidung über den Einspruch: **30.04.2025**
(45) Hinweis auf die Patenterteilung: 17.04.2019
(21) Anmeldenummer: 15797624.2
(22) Anmeldetag: 09.11.2015
(51) Int. Cl.: B29C 47/12, B29C 47/24, B29C 47/56, B29C 47/08, B29K 21/00, B29L 30/00, B29D 30/52, B29D 30/62, B29C 47/06

(54) **MEHRFACH-STRANGPRESSKOPF**
MULTIPLE EXTRUSION HEAD
TÊTE D'EXTRUSION MULTIPLE

(30) Priorität: 21.11.2014 DE 102014117068
(43) Veröffentlichungstag der Anmeldung: 27.09.2017
(73) Patentinhaber: KraussMaffei Extrusion GmbH, 30880 Laatzen (DE)
(72) Erfinder: HAHN, Klaus, 30952 Ronnenberg (DE); HEPKE, Harald, 30625 Hannover (DE)
(74) Vertreter: Käufl, Florian Johannes
(86) Internationale Anmeldenummer: PCT/EP2015/076070
(87) Internationale Veröffentlichungsnummer: WO 2016/078951

(56) Entgegenhaltungen:
- EP-A1- 0 165 412
- EP-A1- 0 270 816
- EP-A1- 0 347 589
- EP-A1- 0 484 869
- EP-A1- 0 596 279
- EP-A1- 0 724 945
- EP-A2- 0 201 337
- EP-A2- 1 604 802
- EP-A2- 2 308 666
- EP-A2- 2 682 249
- EP-B1- 0 407 756
- CH-A- 509 147
- CN-A- 101 456 246
- CN-A- 101 456 249
- CN-A- 101 823 326
- CN-A- 103 171 113
- CN-A- 103 182 774
- CN-U- 202 016 186
- CN-U- 203 221 640
- CN-U- 203 221 641
- CN-U- 203 221 642
- CN-Y- 2 222 601
- CN-Y- 2 251 480
- CN-Y- 201 012 535
- CN-Y- 201 313 393
- CN-Y- 201 357 559
- CN-Y- 201 357 562
- DE-A1- 102004 052 351
- DE-A1- 102011 084 110
- DE-A1- 102011 111 463
- DE-A1- 102012 111 439
- DE-A1- 19 517 247
- DE-A1- 19 529 077
- DE-A1- 19 803 269
- DE-A1- 3 430 062
- DE-A1- 3 729 447
- DE-C1- 3 506 257
- DE-C1- 3 638 623
- DE-U1- 8 421 868
- JP-A- 2001 047 494
- JP-A- 2013 009 881
- JP-A- H0 664 842
- JP-A- H01 218 818
- JP-A- S5 458 762
- JP-A- S57 210 839
- JP-U- H0 675 724
- KR-A- 20030 095 470
- KR-B1- 101 042 925
- RU-C2- 2 254 239
- US-A- 4 515 738
- US-A- 4 548 568
- US-A- 4 652 224
- US-A- 4 693 855
- US-A- 4 781 560
- US-A- 4 824 353
- US-A- 4 832 590
- US-A- 5 332 380
- US-A- 5 720 986
- US-A- 5 851 561
- US-A1- 2004 056 391

## Beschreibung

Die Erfindung betrifft einen Mehrfach-Strangpresskopf zum Herstellen von Laufprofilen von Reifen, mit (a) einem Grundkörper, der eine erste Zuführöffnung zum Anschließen eines ersten Extruders, eine zweite Zuführöffnung zum Anschließen eines zweiten Extruders, eine dritte Zuführöffnung zum Anschließen eines dritten Extruders und eine vierte Zuführöffnung zum Anschließen eines vierten Extruders besitzt, (b) einem ersten Kopfteil, das relativ zum Grundkörper schwenkbar gelagert ist und eine in Richtung auf den Grundkörper offene Aufnahme aufweist, (c) einem zweiten Kopfteil, das relativ zum Grundkörper schwenkbar gelagert ist, (c) zumindest einem Fließkanaleinsatz, der relativ zum Grundkörper schwenkbar gelagert ist, (c) wobei das erste Kopfteil und das zweite Kopfteil in einen geschlossenen Zustand bringbar sind, in dem die Kopfteile miteinander druckfest verbunden sind und im Mehrfach-Strangpresskopf ein erster Fließkanal, ein zweiter Fließkanal, ein dritter Fließkanal und ein vierter Fließkanal gebildet sind, wobei jeder Fließkanal mit einer, insbesondere jeweils genau einer, Zuführöffnung verbunden ist.

Ein derartiger Mehrfach-Strangpresskopf ist aus der DE 197 57 261 C1 bekannt und wird zur Herstellung von Laufprofilen von Reifen verwendet. Diese Laufprofile müssen an unterschiedlichen Stellen verschiedene Anforderung erfüllen, so dass sie aus mehr als einem Material in der Regel Kautschuk oder Gummi, hergestellt werden. Das Material wird durch den Strangpresskopf dem Extruder zugeführt. Ähnliche Mehrfach-Strangpressköpfe offenbaren die Druckschriften DE 36 38 623 C1, EP 2 308 666 A2, EP 1 604 802 A2 und DE 35 06 257 C1.

Nachteilig an bekannten Mehrfach-Strangpressköpfen ist, dass Laufstreifen, die zur Fertigung von verbesserten Reifen benötigt werden, nicht hergestellt werden können.

Der Erfindung liegt die Aufgabe zugrunde, die Fertigung von Laufstreifen zu verbessern.

Die Erfindung löst das Problem durch einen gattungsgemäßen Mehrfach-Strangpresskopf, bei dem der Grundkörper eine Zuführöffnung zum Anschließen eines fünften Extruders hat und der einen zweiten Fließkanaleinsatz aufweist, der unabhängig vom ersten Fließkanaleinsatz relativ zum Grundkörper schwenkbar gelagert ist und einen fünften Fließkanal begrenzt, der mit der fünften Zuführöffnung verbunden ist.

Vorteilhaft an einem derartigen Mehrfach-Strangpresskopf ist, dass komplexere Laufstreifen hergestellt werden können. Durch den zusätzlichen Fließkanal kann eine weitere Region hergestellt werden, die andere Materialeigenschaften besitzt als bisher herstellbare Laufprofile.

Vorteilhaft ist zudem, dass der Mehrfach-Strangpresskopf trotz der erweiterten Möglichkeit zur Fertigung komplexerer Laufprofile einfach gereinigt werden kann. Das Zuführen von Material für einen weiteren Fließkanal ist nicht ohne Weiteres möglich, da sichergestellt werden muss, dass der Strangpresskopf gereinigt werden kann. Das wird durch die Schwenkbarkeit des zweiten Fließkanaleinsatzes ermöglicht.

Es ist günstig, wenn das erste Kopfteil oberhalb des zweiten Kopfteils angeordnet ist. Insbesondere ist es vorteilhaft, wenn das erste Kopfteil um eine Querachse schwenkbar gelagert ist. Unter diesem Merkmal wird insbesondere verstanden, dass das Kopfteil um eine Schwenkachse schwenkbar gelagert ist, die mit der Horizontalen einen Winkel von höchstens 15°, insbesondere höchstens 2°, einnimmt. In aller Regel ist es vorteilhaft, wenn die Drehachse, um die das erste Kopfteil schwenkbar ist, in möglichst guter Näherung horizontal verläuft.

Günstig ist es zudem, wenn das zweite Kopfteil um eine zweite Querachse schwenkbar gelagert ist, wobei sich die zweite Querachse in die gleiche Richtung wie die erste Querachse erstreckt. Hierunter ist insbesondere zu verstehen, dass es günstig ist, wenn die erste Querachse und die zweite Querachse einen möglichst geringen Winkel miteinander bilden, wobei kleinere Abweichungen möglich sind. Insbesondere ist der Winkel zwischen der ersten Querachse und der zweiten Querachse vorzugsweise kleiner als 10°, insbesondere kleiner als 2°. Gemäß einer bevorzugten Ausführungsform haben der erste Fließkanaleinsatz und der zweite Fließkanaleinsatz eine gemeinsame Dichtfläche. In anderen Worten liegen der erste Fließkanaleinsatz und der zweite Fließkanal so aneinander an, dass sie einander in einer Fläche berühren. Diese Fläche ist so ausgebildet, dass in den Fließkanälen vorhandenes, unter Druck stehendes Gummi die Dichtfläche entlang kriechen würde, wenn der erste Fließkanaleinsatz und der zweite Fließkanaleinsatz nicht aufeinander zu gespannt werden. Vorteilhaft hieran ist, dass sich eine kompakte Bauform ergibt und dass die Fließkanaleinsätze zudem leicht zu reinigen sind. Werden die Fließkanaleinsätze nämlich herausgeschwenkt, so trennen sie sich entlang ihrer Dichtfläche bis zur Schneckenspitze voneinander und die durch die Fließkanaleinsätze gebildeten Fließkanäle können einfach von dem Strangpressmaterial, das mittels des Strangpresskopfs zu einem Profil gespritzt wird, gereinigt werden.

Wenn neben dem ersten und dem zweiten Fließkanaleinsatz kein weiterer Fließkanaleinsatz vorhanden ist, hat der zweite Fließkanaleinsatz vorzugsweise auch eine Dichtfläche mit dem ersten Kopfteil. Es ergeben sich dann die oben geschilderten Vorteile auch für die übrigen Fließkanäle. Es ist jedoch möglich, dass der Mehrfach-Strangpresskopf einen dritten Fließkanaleinsatz aufweist, der unabhängig vom ersten Fließkanaleinsatz und vom zweiten Fließkanaleinsatz relativ zum Grundkörper schwenkbar gelagert ist.

Erfindungsgemäß sind die Fließkanaleinsätze um eine gemeinsame Drehachse relativ zum Grundkörper schwenkbar gelagert. Vorzugsweise verläuft die Drehachse unter einem Winkel von höchstens 15° zur Horizontalen.

Vorteilhaft an einer gemeinsamen Schwenkachse ist, dass der Strangpresskopf besonders prozesssicher zu bedienen ist. Es wird zudem mit einfachen Mitteln eine hohe Dichtigkeit hergestellt und die Fertigung wird erleichtert.

Vorzugsweise sind die Fließkanaleinsätze so ausgebildet, dass dann, wenn die Kopfteile im geschlossenen Zustand sind, der erste Fließkanaleinsatz und der zweite Fließkanaleinsatz einander berühren und zwischen einander einen Fließkanal bilden. Dieser kann durch selektives Wegschwenken der einzelnen Fließkanaleinsätze leicht gereinigt werden.

Vorzugsweise weist der Mehrfach-Strangpresskopf eine Einsatz-Zuhaltevorrichtung auf, mittels der der zweite Fließkanaleinsatz so relativ zum Grundkörper fixierbar ist, dass im zweiten Fließkanal vorhandenes, unter einem Druck von 2,5 MPa stehendes Gummi im Fließkanal haltbar ist, wobei die Einsatz-Zuhaltevorrichtung so ausgebildet ist, dass das erste Kopfteil relativ zum zweiten Fließkanaleinsatz schwenkbar ist, wenn der zweite Fließkanaleinsatz relativ zum Grundkörper fixiert ist. Es ist dann möglich, nur das Kopfteil wegzuschwenken und beispielsweise zu reinigen, ohne dass der erste Fließkanal auch gereinigt werden müsste. Bei bisherigen Strangpressköpfen ist es stets notwendig, alle Fließkanäle zu reinigen, wenn der Strangpresskopf geöffnet wird. Insbesondere dann, wenn der zweite Fließkanal in kürzeren Intervallen gereinigt werden muss, erspart die Einsatz-Zuhaltevorrichtung zusätzlichen Reinigungsaufwand.

Vorzugsweise umfasst der Mehrfach-Strangpresskopf zudem eine Erstkopf-Fixiervorrichtung, mittels der das erste Kopfteil relativ zum Grundkörper fixierbar sind, wobei die Erstkopf-Fixiervorrichtung so ausgebildet ist, dass das erste Kopfteil relativ zum Grundkörper verschwenkbar ist, wenn das zweite Kopfteil relativ zum Grundkörper fixiert ist. Wenn das zweite Kopfteil relativ zum Grundkörper fixiert ist, bedeutet das insbesondere, dass im ersten Fließkanal und im zweiten Fließkanal vorhandenes, unter einem Druck von 2,5 MPa stehendes Gummi im Fließkanal haltbar ist. Das Gummi kann also nicht seitlich in die Dichtflächen eindringen. Wenn das erste Kopftell oberhalb des zweiten Kopfteils angeordnet ist, können so alle Fließkanäle oben gereinigt werden, während die unteren nicht zwangsläufig auch gereinigt werden müssen.

Gemäß einer bevorzugten Ausführungsform umfasst der Mehrfach-Strangpresskopf eine Kopf-Fixiervorrichtung, mittels der die Kopfteile und alle Fließkanaleinsätze relativ zum Grundkörper fixierbar sind. Die Kopf-Fixiervorrichtung ist insbesondere so ausgebildet, dass der beim Extrudieren herrschende Innendruck aufgefangen wird. Diese Kopf-Fixiervorrichtung ist vorzugsweise unabhängig von der Einsatz-Zuhaltevorrichtung und/oder der Zweitkopft-Fixiervorrichtung. Das hat den Vorteil, dass die etwaig vorhandenen sonstigen Fixiervorrichtungen für eine geringere Kraft ausgelegt werden können, was die Konstruktion vereinfacht. Beispielsweise ist die Kopf-Fixiereinrichtung ausgebildet zum formschlüssigen Fixieren der Kopfteile.

Vorzugsweise umfasst der Mehrfach-Strangpresskopf eine Betätigungsvorrichtung zum motorischen Schwenken des zweiten Fließkanaleinsatzes. Das erleichtert die Reinigung und vermindert zudem die Unfallgefahr, da in der Regel kein zusätzliches Werkzeug notewendig ist, um den zweiten Fließkanaleinsatz wegzuschwenken.

Vorzugsweise besitzt der Mehrfach-Strangpresskopf eine Zweitkopf-Fixiervorrichtung zum motorischen Schwenken und Fixieren des zweiten Kopfteils relativ zum Grundkörper.

Besonders günstig ist es, wenn alle Fließkanaleinsätze jeweils einen Antrieb besitzen, mittels dem die Fließkanäle automatisch verschwenkbar sind. Jeder dieser Antriebe ist vorzugsweise ausgebildet zum Aufbringen einer Zuhaltekraft auf den jeweiligen Fließkanaleinsatz, die so größer ist als die Kraft, die von im Fließkanal unter einem Druck von 2,5 MPa stehenden Gummi ausgeübt wird. Das Gummi wird dann sicher im Fließkanal gehalten. Es wird so vermieden, dass alle Fließkanal gereinigt werden müssen, obwohl nur ein Fließkanal der Reinigung bedarf.

Die Erfindung löst das Problem zudem durch eine Laufprofil-Herstellvorrichtung mit den Merkmalen von Anspruch 8.

Im Folgenden wird die Erfindung anhand der beigefügten Zeichnungen näher erläutert. Dabei zeigt
- Figur 1: einen Querschnitt durch einen erfindungsgemäßen Mehrfach-Strangpresskopf, bei dem ein Kopfteil und ein Fließkanaleinsatz weggeschwenkt sind,
- Figur 2: den Mehrfach-Strangpresskopf gemäß Figur 1, bei dem lediglich das erste Kopfteil weggeschwenkt ist, und
- Figur 3: den Mehrfach-Strangpresskopf im geschlossenen Zustand.
- Figur 4: zeigt den Mehrfach-Strangpresskopf, bei dem lediglich der zweite Fließkanal geschlossen ist und
- Figur 5: zeigt den Mehrfach-Strangpresskopf nach Figur 4, bei dem das erste Kopfteil weggeschwenkt ist und das zweite Kopfteil in der geschlossenen Stellung ist.

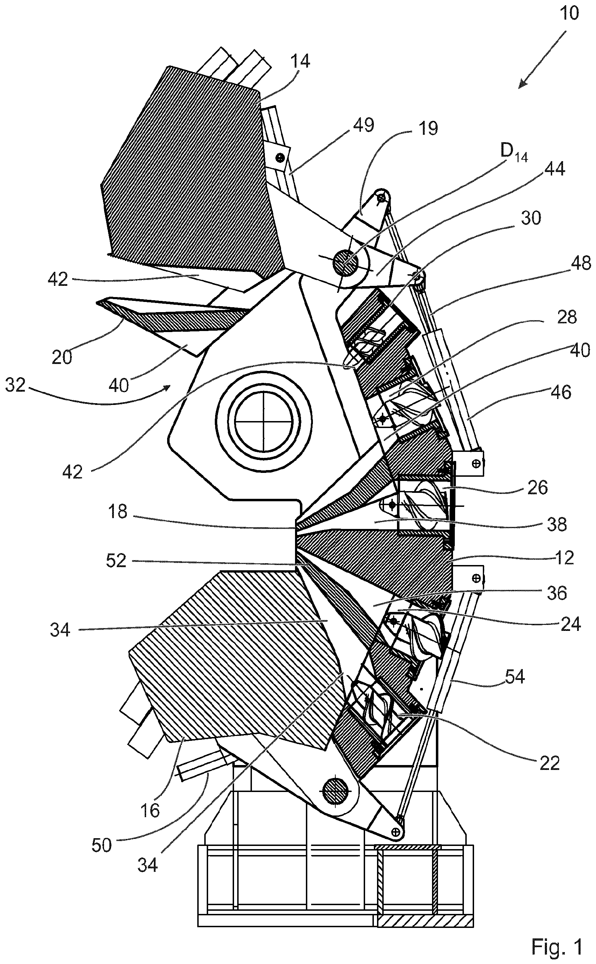

Figur 1 zeigt einen erfindungsgemäßen Mehrfach-Strangpresskopf 10, der einen Grundkörper 12, ein erstes Kopfteil 14, ein zweites Kopfteil 16, einen ersten Fließkanaleinsatz 18 und einen zweiten Fließkanaleinsatz 20 umfasst.

Der Grundkörper 12 besitzt eine erste Zuführöffnung 22, eine zweite Zuführöffnung 24, eine dritte Zuführöffnung 26, eine vierte Zuführöffnung 28 und eine fünfte Zuführöffnung 30. Durch alle Zuführöffnungen 22, 24, 26, 28, 30 wird im Betrieb des Mehrfach-Strangpresskopfs 10 zu verpressendes Material, beispielsweise Gummi oder Kautschuk, unter einem Druck p von zumindest 2,5 MPa von jeweils einem Extruder zugeführt. Schematisch sind von den jeweiligen Extrudern die Enden der Extruderschnecken gezeigt, die in die Zuführöffnungen 22, 24, 26, 28, 30 ragen.

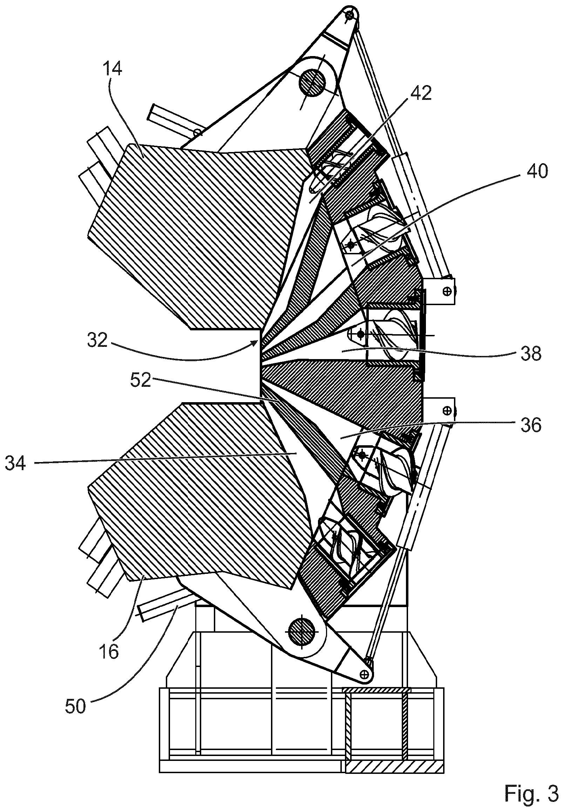

Das erste Kopfteil 14 ist um eine horizontale Drehachse D₁₄ relativ zum Grundkörper 12 schwenkbar gelagert. Das erste Kopfteil 14 besitzt eine Aufnahme 32, die zum Grundkörper 12 offen ist. Hierunter ist zu verstehen, dass das erste Kopfteil 14 in dem Bereich der Aufnahme 32 einen Hohlraum mit dem Grundkörper 12 bildet, wenn das erste Kopfteil 14 in der in Figur 3 gezeigten geschlossenen Stellung ist. In diesem Hohlraum ist insbesondere der zweite Fließkanaleinsatz 20 angeordnet. Das zweite Kopfteil 16 ist um eine Drehachse D₁₆ schwenkbar gelagert.

Der Mehrfach-Strangpresskopf umfasst einen ersten Fließkanal 34, der sich von der ersten Zuführöffnung 22 aus erstreckt, einen zweiten Fließkanal 36, der sich von der zweiten Zuführöffnung 24 aus erstreckt, einen dritten Fließkanal 38, der sich von der dritten Zuführöffnung 26 aus erstreckt, einen vierten Fließkanal 40, der sich von der vierten Zuführöffnung 28 aus erstreckt und einen fünften Fließkanal 42, der sich von der fünften Zuführöffnung 30 weg erstreckt.

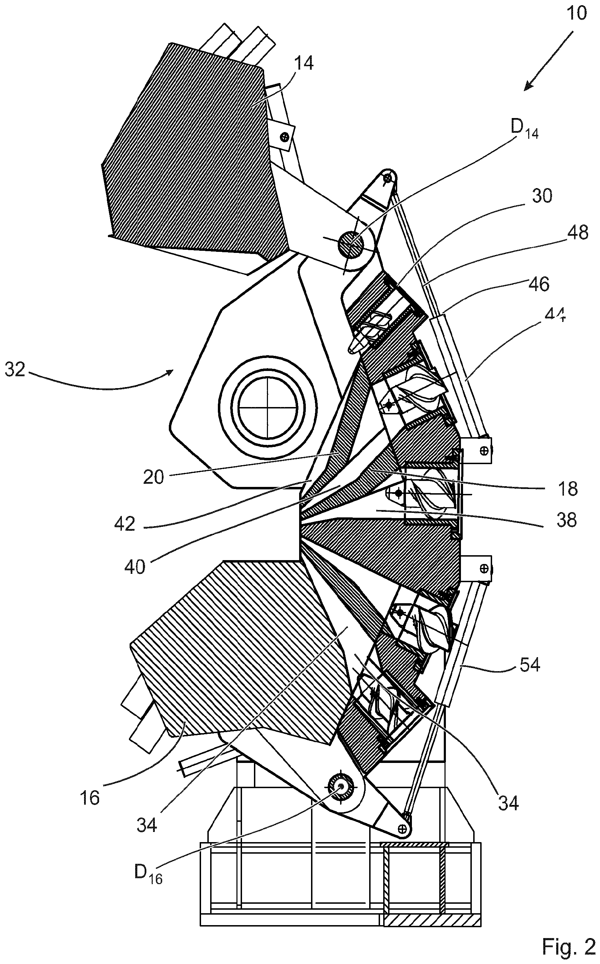

Figur 2 zeigt, dass der zweite Fließkanaleinsatz 20 sowohl den vierten Fließkanal 40 als auch den fünften Fließkanal 42 begrenzt. Der erste Fließkanaleinsatz 18 und der zweite Fließkanaleinsatz 20 berühren einander und bilden zwischen einander den vierten Fließkanal 40. Es ist zudem zu erkennen, dass der erste Fließkanaleinsatz 18 den dritten Fließkanal 38 und den vierten Fließkanal 40 begrenzt. Der erste Fließkanaleinsatz 18 ist mittels eines Antriebs 19 um die Drehachse D₁₄ schwenkbar, um die auch das erste Kopfteil 14 schwenkbar gelagert ist. In Figur 2 ist die Erstkopf-Fixiervorrichtung 49 (siehe Figur 1) nicht eingezeichnet.

Der Mehrfach-Strangpresskopf 10 besitzt eine Einsatz-Zuhaltevorrichtung 44, mittels der der zweite Fließkanaleinsatz 20 auf den Grundkörper 12 zu drückbar ist. Im vorliegenden Fall umfasst die Einsatz-Zuhaltevorrichtung 44 einen Hydraulikzylinder 46, dessen Kolbenstange 48 auf den zweiten Fließkanaleinsatz 20 wirkt (vgl. Fig. 1). Die Einsatz-Zuhaltevorrichtung 44 ist so ausgebildet, dass sie den zweiten Fließkanaleinsatz 20 so fest gegen den Grundkörper 12 presst, dass im Fließkanal vorhandenes Material, das unter einem Druck von 2,5 MPa, insbesondere von 3,5 MPa, steht, den zweiten Fließkanaleinsatz 20 nicht vom Grundkörper 12 wegdrücken kann.

Es ist zu erkennen, dass das erste Kopfteil 14 mittels einer Erstkopf-Fixiervorrichtung 49 relativ zum zweiten Fließkanaleinsatz 20 schwenkbar ist, insbesondere auch dann, wenn der zweite Fließkanaleinsatz 20 mittels der Einsatz-Zuhaltevorrichtung 44 relativ zum Grundkörper 12 fixiert ist.

Figur 1 zeigt zudem eine Zweitkopf-Fixiervorrichtung 50, die im vorliegenden Fall ebenfalls einen Hydraulikzylinder umfasst. Die Zweitkopf-Fixiervorrichtung 50 wirkt auf das zweite Kopfteil 16, so dass dieses relativ zum Grundkörper 12 fixierbar ist. Wie in Figur 1 gezeigt ist, kann das erste Kopfteil 14 relativ zum Grundkörper 12 verschwenkt werden, wenn das zweite Kopfteil 16 relativ zum Grundkörper 12 fixiert ist. Die Zweitkopf-Fixiervorrichtung 50 ist so ausgelegt, dass das Material im ersten Fließkanal 34 unter einem Druck von cirka 5 MPa, insbesondere 3,5 Mpa, stehen kann, ohne dass dieser Druck das zweite Kopfteil 16 vom Grundkörper 12 wegdrücken kann.

Mittels der Zweitkopf-Fixiervorrichtung 50 kann das zweite Kopfteil 16 zudem aufgefahren werden. Die Zweitkopf-Fixiervorrichtung könnte damit auch als Betätigungsvorrichtung bezeichnet werden.

Figur 3 zeigt den Mehrfach-Strangpresskopf 10 im geschlossenen Zustand. Er ist Teil einer erfindungsgemäßen Laufprofil-Herstellvorrichtung, die neben dem Mehrfach-Strangpresskopf 10 fünf Extruder aufweist, von denen jeweils einer mit genau einer der Zuführöffnungen 22, 24, 26, 28, 30 zum Zuführen von Extrusionsmaterial verbunden ist.

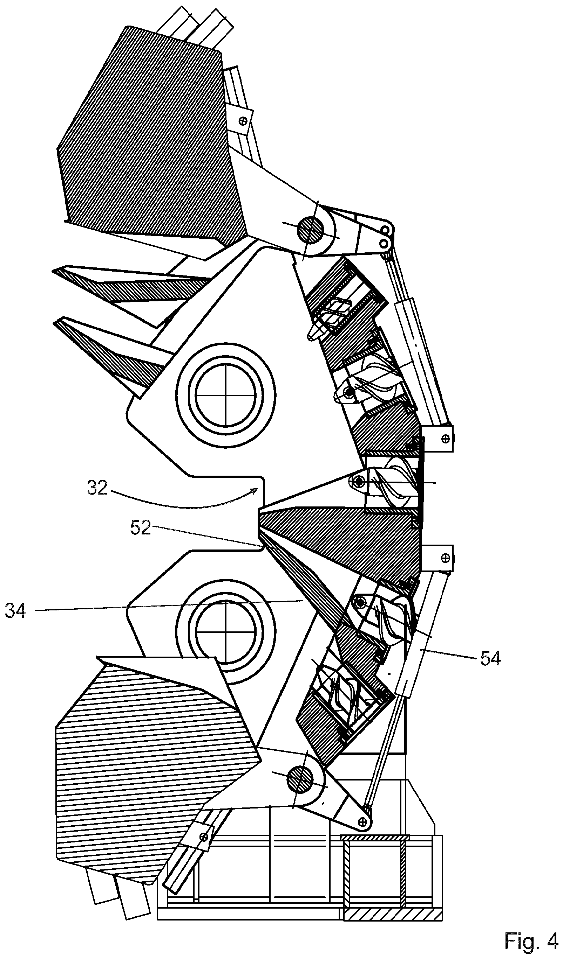

Figur 4 zeigt den Mehrfach-Strangpresskopf 10 mit geöffnetem zweitem Kopfteil 16 und einem dritten Fließkanaleinsatz 52, der unabhängig vom zweiten Kopfteil 16 motorisch mittels eines Antriebs 54 schwenkbar ist. Der dritte Fließkanaleinsatz 52 begrenzt den zweiten Fließkanal 36 und den ersten Fließkanal 34.

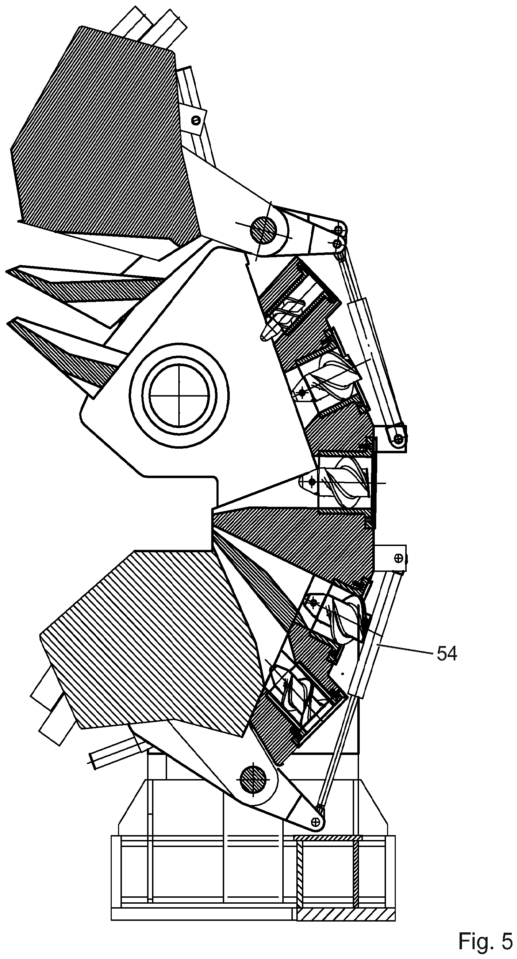

Figur 5 zeigt den Mehrfach-Strangpresskopf, bei dem das erste Kopfteil weggeschwenkt ist und das zweite Kopfteil in der geschlossenen Stellung ist.

Die Fließkanaleinsätze 18, 20 und 52 sind, was eine bevorzugte Ausführungsform darstellt, an jeweiligen Armen befestigt, wobei die Arme schwenkbar gelagert sind. Das ermöglicht es, die Fließkanaleinsätze zu wechseln.

### Bezugszeichenliste

- 10: Mehrfach-Strangpresskopf
- 12: Grundkörper
- 14: Erstes Kopfteil
- 16: Zweites Kopfteil
- 18: Erster Fließkanaleinsatz
- 20: Zweiter Fließkanaleinsatz
- 22: Erste Zuführöffnung
- 24: Zweite Zuführöffnung
- 26: Dritte Zuführöffnung
- 28: Vierte Zuführöffnung
- 30: Fünfte Zuführöffnung
- 32: Aufnahme
- 34: Erster Fließkanal
- 36: Zweiter Fließkanal
- 38: Dritter Fließkanal
- 40: Vierter Fließkanal
- 42: Fünfter Fließkanal
- 44: Einsatz-Zuhaltevorrichtung
- 46: Hydraulikzylinder
- 48: Kolbenstange
- 49: Erstkopf-Fixiervorrichtung
- 50: Zweitkopf-Fixiervorrichtung
- 52: Dritter Fließkanaleinsatz
- 54: Antrieb
- P: Druck
- D_{14,16}: Drehachse

## Patentansprüche

1. Mehrfach-Strangpresskopf zum Herstellen von Laufprofilen von Reifen, mit
(a) einem Grundkörper (12), der
- eine erste Zuführöffnung (22) zum Anschließen eines ersten Extruders,
- eine zweite Zuführöffnung (24) zum Anschließen eines zweiten Extruders,
- eine dritte Zuführöffnung (26) zum Anschließen eines dritten Extruders und
- eine vierte Zuführöffnung (28) zum Anschließen eines vierten Extruders besitzt,
(b) einem ersten Kopfteil (14), das
relativ zum Grundkörper (12) schwenkbar gelagert ist und
eine in Richtung auf den Grundkörper (12) offene Aufnahme (32) aufweist,
(c) einem zweiten Kopfteil (16), das
relativ zum Grundkörper (12) schwenkbar gelagert ist,
(d) zumindest einem Fließkanaleinsatz (18, 20), der
relativ zum Grundkörper (12) schwenkbar gelagert ist,
(e) wobei das erste Kopfteil (14) und das zweite Kopfteil (16) in einen geschlossenen Zustand bringbar sind, in dem
- die Kopfteile (14,16) miteinander druckfest verbunden sind und
- im Mehrfach-Strangpresskopf (10) ein erster Fließkanal (34), ein zweiter Fließkanal (36), ein dritter Fließkanal (38) und ein vierter Fließkanal (40) gebildet sind, wobei jeder Fließkanal mit einer Zuführöffnung verbunden ist,
**dadurch gekennzeichnet, dass**
(f) der Grundkörper (12) eine fünfte Zuführöffnung (30) zum Anschließen eines fünften Extruders hat und dass
(g) der Mehrfach-Strangpresskopf (10) einen zweiten Fließkanaleinsatz (20) aufweist, wobei die Fließkanaleinsätze (18, 20) um eine gemeinsame Drehachse (D₁₄) relativ zum Grundkörper (12) schwenkbar gelagert sind, wobei
der zweite Fließkanaleinsatz (20)
- unabhängig vom ersten Fließkanaleinsatz (18) relativ zum Grundkörper um die gemeinsame Drehachse (D₁₄) schwenkbar gelagert ist und
- einen fünften Fließkanal (42) begrenzt, der mit der fünften Zuführöffnung (30) verbunden ist.

2. Mehrfach-Strangpresskopf nach Anspruch 1, **dadurch gekennzeichnet, dass** der erste Fließkanaleinsatz (18) und der zweite Fließkanaleinsatz (20) eine gemeinsame Dichtfläche haben.

3. Mehrfach-Strangpresskopf nach einem der vorstehenden Ansprüche, **dadurch gekennzeichnet, dass** wenn die Kopfteile (14,16) im geschlossenen Zustand sind, der erste Fließkanaleinsatz (18) und der zweite Fließkanaleinsatz (20) einander berühren und zwischen einander den vierten Fließkanal (40) bilden.

4. Mehrfach-Strangpresskopf nach einem der vorstehenden Ansprüche,
**gekennzeichnet durch**
eine Erstkopf-Fixiervorrichtung (49),
mittels der das erste Kopfteil (14) relativ zum Grundkörper (12) bewegbar und fixierbar ist,
wobei die Erstkopf-Fixiervorrichtung so ausgebildet ist, dass das erste Kopfteil (14) relativ zum Grundkörper (12) verschwenkbar ist, wenn das zweite Kopfteil (16) relativ zum Grundkörper (12) fixiert ist.

5. Mehrfach-Strangpresskopf nach einem der vorstehenden Ansprüche,
**gekennzeichnet durch** eine Kopf-Fixiervorrichtung, mittels der die Kopfteile (14,16) und alle Fließkanaleinsätze (18, 20) relativ zum Grundkörper (12) fixierbar sind.

6. Mehrfach-Strangpresskopf nach einem der vorstehenden Ansprüche,
**gekennzeichnet durch** eine Betätigungsvorrichtung zum motorischen Schwenken des zweiten Fließkanaleinsatzes (20) relativ zum ersten Fließkanaleinsatz (18).

7. Mehrfach-Strangpresskopf nach einem der vorstehenden Ansprüche,
**gekennzeichnet durch** eine Zweitkopf-Fixiervorrichtung (50) zum motorischen Schwenken und Fixieren des zweiten Kopfteils (16) relativ zum Grundkörper (12).

8. Laufprofil-Herstellvorrichtung zum Herstellen von Laufprofilen von Fahrzeugreifen, mit
- einem Mehrfach-Strangpresskopf (10) nach einem der vorstehenden Ansprüche,
- einem ersten Extruder, der an die erste Zuführöffnung (22) angeschlossen ist,
- einem zweiten Extruder, der an die zweite Zuführöffnung (24) angeschlossen ist, einem dritten Extruder, der an die dritte Zuführöffnung (26) angeschlossen ist, einem vierten Extruder, der an die vierte Zuführöffnung (28) angeschlossen ist, und
- zumindest einem fünften Extruder, der an die zumindest eine fünfte Zuführöffnung (30) angeschlossen ist.

## Claims

1. A multiple extrusion press head for producing tread profiles of tyres, comprising
(a) a base body (12), having
- a first supply opening (22) for connecting a first extruder,
- a second supply opening (24) for connecting a second extruder,
- a third supply opening (26) for connecting a third extruder and
- a fourth supply opening (28) for connecting a fourth extruder,
(b) a first head part (14), which is mounted so that it can swivel in relation to the base body (12) and which has a receiving means (32) that is open in the direction of the base body (12),
(c) a second head part (16) that is mounted so that it can swivel in relation to the base body (12),
(d) at least one flow channel insert (18, 20), that is mounted so that it can swivel in relation to the base body (12),
(e) wherein the first head part (14) and the second head part (16) can be brought into a closed state, in which
- the head parts (14, 16) are connected to one another in a pressure-tight manner, and
- a first flow channel (34), a second flow channel (36), a third flow channel (38) and a fourth flow channel (40) are formed in the multiple extrusion press head (10), wherein each flow channel is connected to a supply opening,
**characterized in that**
(f) the base body (12) has a fifth supply opening (30) for connecting a fifth extruder and that
(g) the multiple extrusion press head (10) has a second flow channel insert (20), wherein the flow channel inserts (18, 20) are mounted so that they can swivel in relation to the base body (12) about a common rotation axis (D₁₄)
wherein
the second flow channel insert (20)
- independently of the first flow channel insert (18) is mounted so that it can swivel in relation to the base body about the common rotation axis (D₁₄) and
- borders a fifth flow channel (42), which is connected to the fifth supply opening (30).

2. The multiple extrusion press head according to Claim 1, **characterized in that** the first flow channel insert (18) and the second flow channel insert (20) have a common sealing surface.

3. The multiple extrusion press head according to one of the preceding claims, **characterized in that** when the head parts (14, 16) are in the closed state, the first flow channel insert (18) and the second flow channel insert (20) touch one another and form between one another the fourth flow channel (40).

4. The multiple extrusion press head according to one of the preceding claims,
**characterized by**
a first head fixing device (49),
by means of which the first head part (14) is able to be moved and fixed in relation to the base body (12),
wherein the first head fixing device is configured so that the first head part (14) is swivellable in relation to the base body (12), when the second head part (16) is fixed in relation to the base body (12).

5. The multiple extrusion press head according to one of the preceding claims,
**characterized by** a head fixing device, by means of which the head parts (14, 16) and all flow channel inserts (18, 20) are able to be fixed in relation to the base body (12).

6. The multiple extrusion press head according to one of the preceding claims,
**characterized by** an actuating device for motor-driven swivelling of the second flow channel insert (20) in relation to the first flow channel insert (18).

7. The multiple extrusion press head according to one of the preceding claims,
**characterized by** a second head fixing device (50) for the motor-driven swivelling and fixing of the second head part (16) in relation to the base body (12).

8. A tread profile production device for producing tread profiles of vehicle tyres, with
- a multiple extrusion press head (10) according to one of the preceding claims,
- a first extruder, which is connected to the first supply opening (22),
- a second extruder, which is connected to the second supply opening (24), a third extruder, which is connected to the third supply opening (26), a fourth extruder, which is connected to the fourth supply opening (28), and
- at least one fifth extruder, which is connected to the at least one fifth supply opening (30).

## Revendications

1. Tête d'extrudeuse multiple pour fabriquer des profilés de roulement de pneus, comprenant :
(a) un corps de base (12) qui possède
- une première ouverture d'alimentation (22) pour raccorder une première extrudeuse,
- une deuxième ouverture d'alimentation (24) pour raccorder une deuxième extrudeuse,
- une troisième ouverture d'alimentation (26) pour raccorder une troisième extrudeuse,
- une quatrième ouverture d'alimentation (28) pour raccorder une quatrième extrudeuse,
(b) une première partie de tête (14), qui est disposée pivotante par rapport au corps de base (12) et présente une réception ouverte (32) en direction du corps de base (12),
(c) une deuxième partie de tête (16) qui est disposée pivotante par rapport au corps de base (12),
(d) au moins un insert de canal d'écoulement (18, 20) qui est disposé pivotant par rapport au corps de base (12),
(e) dans laquelle la première partie de tête (14) et la deuxième partie de tête (16) peuvent être amenées dans un état fermé dans lequel
- les parties de tête (14, 16) sont reliées entre elles à l'épreuve de la pression et
- un premier canal d'écoulement (34), un deuxième canal d'écoulement (36), un troisième canal d'écoulement (38) et un quatrième canal d'écoulement (40) sont formés dans la tête d'extrudeuse multiple (10), dans laquelle chaque canal d'écoulement est relié à une ouverture d'alimentation,
**caractérisée en ce que**
(f) le corps de base (12) a une cinquième ouverture d'alimentation (30) pour raccorder une cinquième extrudeuse et que
(g) la tête d'extrudeuse multiple (10) présente un deuxième insert de canal d'écoulement (20), dans laquelle les inserts de canal d'écoulement (18, 20) sont disposés pivotants sur un pivot commun (D₁₄) par rapport au corps de base (12),
dans laquelle
le deuxième insert de canal d'écoulement (20)
- est disposé pivotant par rapport au corps de base sur le pivot commun (D₁₄) indépendamment du premier insert de canal d'écoulement (18) et
- délimite un cinquième canal d'écoulement (42) qui est relié à la cinquième ouverture d'alimentation (30).

2. Tête d'extrudeuse multiple selon la revendication 1, **caractérisée en ce que** le premier insert de canal d'écoulement (18) et le deuxième insert de canal d'écoulement (20) ont une surface d'étanchéité commune.

3. Tête d'extrudeuse multiple selon l'une des revendications précédentes, **caractérisée en ce que** lorsque les parties de tête (14, 16) sont dans l'état fermé, le premier insert de canal d'écoulement (18) et le deuxième insert de canal d'écoulement (20) se touchent l'un l'autre et forment entre eux le quatrième canal d'écoulement (40).

4. Tête d'extrudeuse multiple selon l'une des revendications précédentes,
**caractérisée par**
un dispositif de fixation de première tête (49),
au moyen duquel la première partie de tête (14) est mobile et peut être fixée par rapport au corps de base (12),
dans laquelle le dispositif de fixation de première tête est ainsi formé que la première partie de tête (14) est pivotante par rapport au corps de base (12) lorsque la deuxième partie de tête (16) est fixée par rapport au corps de base (12).

5. Tête d'extrudeuse multiple selon l'une des revendications précédentes,
**caractérisée par** un dispositif de fixation de tête au moyen duquel les parties de tête (14, 16) et tous les inserts de canal d'écoulement (18, 20) peuvent être fixés par rapport au corps de base (12).

6. Tête d'extrudeuse multiple selon l'une des revendications précédentes,
**caractérisée par** un dispositif d'actionnement pour le basculement motorisé du deuxième insert de canal d'écoulement (20) par rapport au premier insert de canal d'écoulement (18).

7. Tête d'extrudeuse multiple selon l'une des revendications précédentes,
**caractérisée par** un dispositif de fixation de deuxième tête (50) pour le basculement motorisé et la fixation de la deuxième partie de tête (16) par rapport au corps de base (12).

8. Dispositif de fabrication de profilé de roulement pour la fabrication de profilés de roulement de pneus de véhicules comprenant
- une tête d'extrudeuse multiple (10) selon l'une des revendications précédentes,
- une première extrudeuse qui est raccordée à la première ouverture d'alimentation (22),
- une deuxième extrudeuse qui est raccordée à la deuxième ouverture d'alimentation (24), une troisième extrudeuse qui est raccordée à la troisième ouverture d'alimentation (26), une quatrième extrudeuse qui est raccordée à la quatrième ouverture d'alimentation (28), et
- au moins une cinquième extrudeuse qui est raccordée à l'au moins une cinquième ouverture d'alimentation (30).
